# EUROPEAN PATENT APPLICATION

(11) **EP 4 764 261 A1**
(43) Date of publication of application: **24.06.2026**
(21) Application number: 25221775.7
(22) Date of filing: 09.12.2025
(51) Int. Cl.: F16H 61/02

(54) **METHOD OF SUPPORTING VEHICLE OPERATION, METHOD OF GENERATING A DATA-DRIVEN PROCESSING TECHNIQUE FOR SUPPORTING VEHICLE OPERATION, AND VEHICLE**

(30) Priority: 17.12.2024 IN 202411100136
(71) Applicant: ZF CV Systems Global GmbH, 3006 Bern (CH)
(72) Inventor: T M, Mohammed Sagheer, 600125 Chennai (IN)
(74) Representative: ZF Friedrichshafen AG

(57) **Abstract**

Techniques are discloses which are configured to support vehicle operation. The techniques are particularly useful in association with a utility vehicle (20). The vehicle (20) comprises at least one electronic control unit (21) configured to use a data-driven processing technique (24) to determine a gear shifting and/or gear selection operation that contributes to energy-efficiency of the vehicle operation. The data-driven processing technique (24) is determined based on vehicle operation related data collected from a fleet vehicles.

## Description

The invention relates to methods, devices, and systems useful in association with vehicles, in particular utility vehicles. The invention relates more specifically to methods and systems for use in association with utility vehicles configured to provide information on a gear selection and/or configured to assess a gear selection.

In the context of increasing global awareness regarding climate change and its deleterious effects on the environment, the significance of energy efficiency in vehicle operation receives considerable attention. The transportation sector is presently still one of the significant contributors to greenhouse gas emissions, particularly carbon dioxide. Enhancing energy efficiency in vehicles, specifically in utility vehicles, plays a critical role in mitigating these emissions and promoting sustainability.

Optimizing energy consumption in vehicles leads to reduced fuel use or reduced battery power use, which directly correlates with a decrease in harmful greenhouse gas emissions.

US 2019/0100216 A1, US 2020/0334762 A1, US 2024/0116515 A1,
WO 2016/151554 A1, and WO 2023/222421 A1 disclose techniques useful in association with vehicle operation. The techniques discussed in these documents do not address energy efficient operation of vehicles, in particular energy efficient operation of utility vehicles.

Thus, there is an ongoing need for enhanced techniques of supporting vehicle operation. There is a particular need for such techniques that contribute to enhanced gear shifting or gear selection choices, in view of the need to reduce energy consumption.

The problem addressed by the invention resides in providing enhanced techniques useful in association with vehicles, such as utility vehicles. More particularly, the problem to be addressed resides in providing methods, devices and/or systems configured to assist in vehicle transmission related operations (such as gear selection and/or gear shifting decisions) in a manner that enhances energy efficiency, while mitigating the risk of sub-optimal decisions being made in vehicle operation.

According to the invention, methods and a vehicle as recited in the independent claims are provided. The dependent claims define preferred or advantageous embodiments.

According to an aspect of the invention, there is provided a method of supporting vehicle operation of a vehicle. The method comprises obtaining, by at least one electronic control unit (ECU), parameter values of at least one vehicle parameter. The method comprises processing, by the at least one ECU, the parameter values, comprising: applying a data-driven processing technique to an input that is generated based at least on the parameter values, wherein the data-driven processing technique is configured to provide, as an output, vehicle transmission related data that are indicative of a gear selection and/or of a gear shifting operation for a vehicle transmission of the vehicle, the gear selection and/or the gear shifting operation being determined, using the data-driven processing technique, to enhance energy-efficiency of the vehicle operation. The method comprises causing or enabling, by the at least one ECU, performance of at least one action based on the vehicle transmission related data.

Various technical effects and advantages are attained by the method. The ECU determines vehicle transmission related data that enhance energy-efficiency of the vehicle operation. Thereby, the technique contributes to reducing energy consumption and contributes to energy efficiency in vehicle operation. Increased energy efficiency contributes to reducing environmental footprint as well as other benefits for operators. With stringent regulatory requirements concerning emissions, the adoption of energy-efficient technologies allows vehicle operators to reduce energy consumption while complying with regulatory standards. As a consequence, the method contributes to a more sustainable future by promoting cleaner air, and reducing dependence on fossil fuels.

By applying a data-driven processing technique, the risk of human-induced error is reduced when determining the gear selection and/or the gear shifting operation that is appropriate in the interest of energy efficiency. The data-driven processing technique is based on processing parameter values (such as activation function parameters of a machine learning model, decision boundaries of a principal component analysis or support vector machine) that are set based on measurements obtained from a fleet of vehicles. Thus, the vehicle transmission related data is determined using objective criteria, established in a data-driven manner in the data-driven processing technique. The method enhances energy efficiency in vehicle operation, thereby significantly curbing greenhouse gas emissions and contributing to broader environmental and economic goals. This approach not only aligns with global efforts to combat climate change but also enhances the overall performance and viability of utility vehicles in an increasingly eco-conscious marketplace.

Preferably, the at least one ECU may comprise a telematics ECU.

Thereby, the method is performed by or with the aid of the telematics ECU, which offers numerous efficiencies, particularly in the realm of enhanced operational control and communication capabilities. The telematics ECU can obtain and process data from various sensors and systems within the vehicle, supporting real-time analysis and decision-making. This centralized approach streamlines the overall architecture of a vehicle that implements the method. The telematics ECU facilitates bidirectional communication between the vehicle and external systems, such as fleet management system or other cloud-based analytics platforms. This connectivity allows for timely updates, remote diagnostics, and operational adjustments based on real-time data, enhancing the vehicle's ability to adapt to changing conditions while harnessing the benefits of the data-driven processing technique.

Preferably, obtaining the parameter values may comprise communicatively interfacing, by the telematics ECU, with at least one Controller Area Network (CAN) to obtain one or several of the parameter values.

Thereby, the telematics ECU can obtain and process parameter values from various sensors and systems within the vehicle in an effective manner, supporting real-time analysis and decision-making.

Preferably, the at least one CAN may comprise a vehicle transmission CAN.

Thereby, the telematics ECU can obtain and process parameter values from at least the vehicle transmission CAN, which parameter values are related to a vehicle transmission of the vehicle. Such parameter values from the vehicle transmission CAN are particularly useful to determine, using the data-driven processing technique, which gear selection or gear shifting operation is appropriate to attain energy efficient operation.

Preferably, the vehicle may comprise an automated manual transmission (AMT) or a manual transmission (MT).

Thereby, the vehicle transmission related data can be determined for a vehicle comprising an AMT, where it is useful to enhance energy efficient operation of utility vehicles. For a vehicle comprising an MT, the vehicle transmission related data can be used for causing the driver to perform gear shifting and/or gear selection operations that enhance energy efficiency.

Preferably, the transmission CAN may comprise an AMT CAN. The telematics ECU may be configured to communicatively interface with the AMT CAN to obtain at least some of the one or several of the parameter values.

Thereby, the telematics ECU can obtain and process parameter values from the AMT CAN, thereby specifically adapting the technique for use with utility vehicles comprising an AMT. Such parameter values from the AMT CAN are particularly useful to determine, using the data-driven processing technique, which gear selection or gear shifting operation is appropriate to attain energy efficient operation of a utility vehicle comprising an AMT.

Preferably, the telematics ECU may be configured to communicatively interface with the MT to obtain at least some of the one or several of the parameter values.

Thereby, the telematics ECU can obtain and process parameter values relating to the MT, which are useful to determine, using the data-driven processing technique, which gear selection or gear shifting operation is appropriate to attain energy efficient operation.

Preferably, the telematics ECU may be configured to obtain the one or several of the parameter values in a manner that is recurrent as a function of driving distance.

Thereby, the vehicle transmission related data can be determined, by the telematics ECU, in a continual manner (i.e., on an ongoing basis) while an ignition of the vehicle is in an ON state. The method may comprise effecting actions responsive to a change in the gear selection or gear shifting operation determined using the data-driven processing technique as applied to the parameter values that may be varying as a function of location.

Preferably, the telematics ECU may be configured to obtain the one or several of the parameter values in a manner that is periodic as a function of driving distance.

Thereby, the vehicle transmission related data can be determined, by the telematics ECU, in an event-based manner, e.g., in a periodic manner as a function of driving distance while an ignition of the vehicle is in an ON state. The method may comprise effecting actions responsive to a change in the gear selection or gear shifting operation determined using the data-driven processing technique as applied to the parameter values that may be varying as a function of location.

Preferably, the method may comprise communicatively interfacing, by the at least one ECU (e.g., by the telematics ECU), with a tachograph to obtain a driver identifier.

Thereby, information indicated by or derivable from the driver identifier may be utilized by the at least one ECU to determine the vehicle transmission related data. This allows the vehicle transmission related data to be determined responsive to or otherwise based on data associated with the driver identifier, such as years of experience and/or whether the driver identifier is associated with a driver who is still in training.

Preferably, the method may comprise communicatively interfacing, by the at least one ECU (e.g., the telematics ECU), with a fleet management system to obtain the data associated with the driver identifier and use the data associated with the driver identifier when determining the vehicle transmission related data.

Thereby, the vehicle transmission related data can be determined responsive to or otherwise based on the data associated with the driver identifier, such as years of experience and/or whether the driver identifier is associated with a driver who is still in training, which are obtainable by communicatively interfacing with the fleet management system.

Preferably, the method may comprise verifying, based on the driver identifier, that the data-driven processing technique is to be applied to determine the vehicle transmission related data.

Thereby, the vehicle transmission related data can be determined responsive to a verification performed based on the driver identifier. This allows the vehicle transmission related data to be provided specifically for drivers in need of such assistance, e.g., for a driver having a driving experience (measured in a time unit such as, e.g., in number of hours or years) less than a threshold (which may be a predetermined threshold or a configurable threshold), and/or for a driver determined, based on the driver identifier, to be a driver in training.

Preferably, the method may comprise generating, by the at least one ECU (e.g., by the telematics ECU) the input to the data-driven processing technique based at least on the parameter values. Generating the input may comprise generating, by the at least one ECU (e.g., by the telematics ECU), the input based on a derivative of at least one, preferably based on derivatives of several of the parameter values.

Thereby, the vehicle transmission related data may be determined in a manner that is particularly robust for determining an appropriate gear selection or gear shift, while allowing the data-driven processing technique to be set up (e.g., by means of training) in an efficient manner. Vehicle operation that facilitates energy consumption reduction is supported thereby.

Preferably, generating the input may comprise generating, by the at least one ECU (e.g., by the telematics ECU), the input based on a gradient of at least one, preferably based on spatial gradients of several of the parameter values; with the input being based on the spatial gradient(s).

Thereby, the vehicle transmission related data may be determined in a manner that is particularly robust for determining an appropriate gear selection and/or gear shifting operations, taking into account variations of parameter values of the vehicle. Vehicle operation that facilitates energy-efficient operation is supported thereby.

Preferably, generating the input for the data-driven processing technique may comprise determining, by the at least one ECU (e.g., by the telematics ECU), the input for the data-driven processing technique based on parameter values of one, several or all of the following vehicle parameters: vehicle speed; wheel speed; engine speed (e.g., rotations per minute (RPM)); accelerator pedal position; brake pedal position; clutch Position; clutch switch; current gear position; selected gear; Anti-lock Braking System (ABS) activation; Adaptive Transmission Control (ATC) activation; roll stability control (RSC) activation; yaw control activation; road inclination; road condition; with the input being based on the gradient(s). These parameter values may be obtained in a recurrent manner (e.g., periodically), as previously discussed.

Thereby, the vehicle transmission related data may be determined in a manner that is robust for determining a gear selection or gear shift with a view to lowering energy consumption, while allowing the data-driven processing technique to be set up (e.g., by means of training) in an efficient manner. Vehicle operation that facilitates energy consumption reduction is supported thereby.

Preferably, generating the input for the data-driven processing technique may comprise determining, by the at least one ECU (e.g., by the telematics ECU), a gradient (i.e., a first order derivative) for a parameter value of one, several or all of the following vehicle parameters: vehicle speed; wheel speed (e.g., high resolution wheel speed); engine speed (e.g., rotations per minute (RPM)); accelerator pedal position; brake pedal position; clutch position. These gradients may be determined in a recurrent manner (e.g., periodically) while an ignition of the vehicle is on.

Thereby, the vehicle transmission related data may be determined in a manner that is particularly robust for determining an appropriate gear selection or gear shift, taking into account changes of parameter values that are quantified by the gradient(s). Vehicle operation that facilitates energy consumption reduction is supported thereby.

Preferably, generating the input for the data-driven processing technique may comprise generating the input based on the gradients and a normalization factor or coefficient, with the normalization factor or coefficient being dependent on one, several, or all of: road inclination; gross vehicle weight; vehicle load weight. Optionally, the normalization factor or coefficient may be further dependent on one, several, or all of: road condition; time of day; vehicle type.

Thereby, the vehicle transmission related data may be determined in a manner that is particularly robust for determining an appropriate gear selection or gear shift, taking into account factors that are dependent on a road slope, a gravity force acting on the vehicle, and/or friction forces. Vehicle operation that facilitates energy consumption reduction is supported thereby.

Preferably, the method may comprise obtaining part of the parameter values responsive to an ignition of the vehicle being turned on (e.g., only once per ignition cycle), and using them to generate the input to the data-driven processing technique.

Thereby, parameter values that do not change or change slowly during vehicle operation can be ascertained and used to determine the vehicle transmission related data. Communication bandwidth requirements on a vehicle data bus are reduced by retrieving the parameter values once per ignition cycle.

Preferably, the part of the parameter values obtained responsive to the ignition of the vehicle being turned on (e.g., only once per ignition cycle) and used to generate the input for the data-driven processing technique may comprise one, several, or all of: a weight of a vehicle load of the vehicle; a gross vehicle weight of the vehicle; the driver identifier; a fuel level; a vehicle type identifier.

Thereby, parameter values that do not change or change slowly during vehicle operation but still impact the gear selection or gear shift that results in more energy efficient vehicle operation can be ascertained and used to determine the vehicle transmission related data.

Preferably, the at least one action may comprise a human machine interface (HMI) control action to generate driver feedback based on the vehicle transmission related data obtained using the data-driven processing technique.

Thereby, feedback can be provided to improve vehicle operation.

Preferably, the HMI control action may comprise an HMI control action to generate feedback based on the vehicle transmission related data via an HMI installed onboard the vehicle.

Thereby, feedback can be provided while the vehicle is being operated, contributing to the reduction in energy consumption during an ongoing driving operation while also providing feedback to a driver in a manner that is particularly effective to improve energy efficient operation.

Preferably, the HMI control action may alternatively or additionally comprise an HMI control action to generate feedback based on the vehicle transmission related data via an HMI of a fleet management system and/or an HMI communicatively interfaced with the fleet management system.

Thereby, feedback can be provided in a manner that facilitates driver evaluation and/or training. At the same time, feedback can be provided in a manner that is suitable for use by a fleet operator, e.g., by evaluating, by the fleet management system, the energy efficiency of the vehicle operations in view of the vehicle transmission related data.

Preferably, the vehicle may comprise an AMT.

Thereby, the determination of the vehicle transmission related data is specifically adapted for use with a vehicle that comprises the AMT. In such vehicles, proper gear selection and/or gear shifting is particularly challenging in view of the choices offered by an AMT, while being of particular importance for contributing to reduced energy consumption.

Preferably, the at least one action may comprise an AMT adjustment action to adjust AMT operation based on the vehicle transmission related data obtained using the data-driven processing technique.

Thereby, the determination of the vehicle transmission related data is specifically adapted for adjusting AMT operation. This may comprise adjusting, by the telematics ECU of the vehicle, operation of an AMT ECU to adjust the AMT operation.

Preferably, the method may comprise receiving, by the at least one ECU and from a fleet management system, model data specifying the data-driven processing technique.

Thereby, the data-driven processing technique can be based on data collected from a fleet of vehicles (e.g., of utility vehicles). The determination of the model data specifying the data-driven processing technique may be performed by the fleet management system, where vehicle operation related data from the fleet of vehicles are available and can be readily processed to determine the model data specifying the data-driven processing technique.

Preferably, the method may comprise generating, by the fleet management system, the model data specifying the data-driven processing technique based on vehicle operation related data from a fleet of vehicles.

Thereby, the data-driven processing technique can be based on data collected from a fleet of vehicles (e.g., of utility vehicles). The determination of the model data specifying the data-driven processing technique may be performed by the fleet management system, where vehicle operation related data from the fleet of vehicles are available and can be readily processed to determine the model data specifying the data-driven processing technique.

Preferably, the fleet of vehicles may comprise vehicles that do not have an AMT.

Thereby, decisions taken by drivers in vehicles that do not have an AMT can be used to generate the model data specifying the data-driven processing technique.

Preferably, obtaining at least part of the vehicle operation related data may comprise applying a filter to selectively discard vehicle operation related data for time windows around automatic control actions (such as automatic braking operations).

Thereby, decisions taken by drivers in vehicles can be used to generate the model data specifying the data-driven processing technique. The filter helps discriminate actions taken by automated vehicle systems from those taken by drivers when generating the data-driven processing technique.

Preferably, generating, by the fleet management system, the model data specifying the data-driven processing technique may comprise: obtaining, from the vehicle operation related data, driver-related data identifying a driver of a vehicle of the fleet; ascertaining, based on the driver-related data, whether the driver has a work experience that meets at least one pre-determined and/or configurable selection criterion; and using the vehicle operation related data from the vehicle driven by the driver based on whether the work experience that meets at least one pre-determined and/or configurable selection criterion.

Thereby, the data-driven processing technique can be generated based on vehicle operation related data obtained from vehicles for which the driver has sufficient experience to perform operations that contribute to reducing environmental impact.

Preferably, the fleet management system may be configured to determine derivatives, such as first order derivatives (e.g., gradients) of at least some of the vehicle operation related data to generate the model data specifying the data-driven processing technique.

Thereby, the data-driven processing technique can be generated based on changes in vehicle operation related data that can affect the most suitable gear selection.

Preferably, generating the data-driven processing technique may comprise determining, by the fleet management system, a gradient (i.e., a first order derivative) for one, several or all of the following vehicle operation related data obtained for at least some of the vehicles in the fleet: vehicle speed; wheel speed (e.g., high resolution wheel speed); engine speed (e.g., rotations per minute (RPM)); accelerator pedal position; brake pedal position; clutch position.

Thereby, the data-driven processing technique can be generated based on how changes in vehicle operation related data can affect the most suitable gear selection.

According to another aspect of the invention, there is provided a generating method of generating a data-driven processing technique for supporting vehicle operation of a vehicle. The generating method may be operative to generate the data-driven processing technique for use in the method of supporting vehicle operation according to any aspect or embodiment disclosed herein. The generating method comprises: obtaining, by at least one processing circuit of a fleet management system, vehicle operation related data from a fleet of vehicles; generating, by the at least one processing circuit, model data specifying the data-driven processing technique based on the vehicle operation related data, comprising identifying model parameter values and/or model hyperparameter values of the data-driven processing technique that cause the data-driven processing technique to provide, as an output, vehicle transmission related data that are indicative of a gear selection and/or of a gear shifting operation that is determined to enhance energy-efficiency; and providing, by the fleet management system, the model data specifying the data-driven processing technique for use in supporting the vehicle operation.

Various technical effects and advantages are attained by the generating method. The generating method provides a data-driven processing technique based on vehicle operation related data for the fleet of vehicles, thereby establishing criteria for the gear selection or gear shifting operation that are data-based and, thus, objective. The risk of human-induced error is reduced when determining the gear selection and/or the gear shifting operation that is appropriate in the interest of energy efficiency based on the vehicle operation related data for the fleet. The data-driven processing technique enables vehicle operation data to be processed using processing parameter values (such as activation function parameters of a machine learning model, decision boundaries of a principal component analysis or support vector machine) that are set based on measurements or other vehicle operation related data obtained from the fleet of vehicles. Thus, the generating method provides a data driven processing technique that is configured to allow determination of vehicle transmission related data using objective criteria, established in a data-driven manner. The generating method contributes to enhancing energy efficiency in vehicle operation, thereby significantly curbing greenhouse gas emissions and contributing to broader environmental and economic goals. This approach not only aligns with global efforts to combat climate change but also enhances the overall performance and viability of utility vehicles in an increasingly eco-conscious marketplace. Using a fleet management system to implement the generating method also provides the effect that various effects that can influence energy efficient gear shifting, such as load weight and/or gross weight and/or vehicle type of the vehicles of the fleet, are available to the fleet management system.

Preferably, the fleet of vehicles may comprise one or several vehicles that do not have an AMT, wherein the model data specifying the data-driven processing technique are determined based on the vehicle operation related data obtained for the one or several vehicles that do not have an AMT.

Thereby, the model data specifying the data-driven processing technique are generated based on manual gear selection or gear shifting operations performed by experienced drivers of vehicles in the fleet. This renders the data-driven processing technique particularly suitable for providing feedback on gear selection or gear shifting operations that reduce energy consumption and/or for fine tuning an AMT ECU to further reduce energy consumption.

Preferably, obtaining at least part of the vehicle operation related data may comprise applying a filter to selectively discard vehicle operation related data for time windows around automatic control actions (such as automatic braking operations).

Thereby, the model data specifying the data-driven processing technique are generated in a manner that disregards automatic control actions performed by, e.g., an AMT. The model data specifying the data-driven processing technique are generated based on manual gear selection or gear shifting operations performed by experienced drivers of vehicles in the fleet. This renders the data-driven processing technique particularly suitable for providing feedback on gear selection or gear shifting operations that reduce energy consumption and/or for fine tuning an AMT ECU to further reduce energy consumption.

Preferably, the fleet management system may be configured to determine derivatives, in particular derivatives of the first degree (gradients) and/or of higher degrees, that quantify how changes in the various quantities indicated by the vehicle operation related data affect the gear shifting and/or gear selection operation that would be most suitable in the interest of energy efficiency.

Thereby, the data-driven processing technique may be generated in a manner that provides particularly robust recommendations on gear shifting and/or gear selection, taking into consideration how gear shifting and/or gear selection suggestions depend on variations in vehicle operation related data encountered during field operation of vehicles in the fleet.

Preferably, the generating method may comprise obtaining, from the vehicle operation related data, driver identifiers for drivers of vehicles in the fleet of vehicles. Obtaining the driver identifiers may comprise obtaining the driver identifiers from tachographs via telematics ECUs of the vehicles in the fleet of vehicles. Obtaining the driver identifiers may comprise an obfuscation to safeguard privacy. Generating, by the at least one processing circuit, the model data specifying the data-driven processing technique may comprise identifying, based on the driver identifiers, vehicles in the fleet that are driven by drivers fulfilling a criterion (such as an experience fulfilling a threshold criterion and/or a flag marking the respective driver as experiences) and selectively using vehicle operation related data for generating the model data specifying the data-driven processing technique based on the which vehicles have drivers determined to fulfill the criterion.

Thereby, the model data specifying the data-driven processing technique can be established based on measurements or other data for vehicles in the fleet ascertained to provide energy efficient driving, e.g., for which the driver has a driving experience (measured in a time unit such as, e.g., in number of hours or years) at least equal to a threshold (which may be a predetermined threshold or a configurable threshold), and/or for which the driver is determined, based on the driver identifier, to be a driver capable of providing training to less experienced drivers.

Preferably, generating the model data specifying the data-driven processing technique may comprise determining, by the at least one processing circuit, the model data specifying the data-driven processing technique based on a spatial gradient of at least one, preferably based on spatial gradients of several measurement included in the vehicle operation related data.

Thereby, the data-driven processing technique may be determined in a manner that is particularly robust for determining an appropriate gear selection or gear shift, taking into account variations of parameter values as a function of driving distance of the vehicle.

Preferably, generating the model data specifying the data-driven processing technique may comprise determining, by the at least one processing circuit, the model data specifying the data-driven processing technique based on one, several or all of the following obtained for vehicles in the fleet: vehicle speed; wheel speed; engine speed (e.g., rotations per minute (RPM)); accelerator pedal position; brake pedal position; clutch Position; clutch switch; current gear position; selected gear; Anti-lock Braking System (ABS) activation; Adaptive Transmission Control (ATC) activation; roll stability control (RSC) activation; yaw control activation; road inclination; road condition; with the input being based on the gradient(s). These measurements may be obtained in a recurrent manner (e.g., periodically), as previously discussed.

Thereby, the data-driven processing technique may be determined in a manner that is particularly robust for determining an appropriate gear selection or gear shift, taking into account variations of parameter values as a function of driving distance of the vehicle.

Preferably, generating the model data specifying the data-driven processing technique may comprise determining, by the at least one processing circuit, a gradient (i.e., a first order derivative) for one, several or all of the following included in the vehicle operation related data: vehicle speed; wheel speed (e.g., high resolution wheel speed); engine speed (e.g., rotations per minute (RPM)); accelerator pedal position; brake pedal position; clutch position. These gradients may be determined in a recurrent manner (e.g., periodically) while an ignition of the vehicle is on.

Thereby, the data-driven processing technique may be determined in a manner that is particularly robust for determining an appropriate gear selection or gear shift, taking into account how variations of vehicle operation related data affect the gear selection and/or gear shifting operation that is most useful to lower energy consumption.

Preferably, generating the model data specifying the data-driven processing technique may comprise determining, by the at least one processing circuit, the model data specifying the data-driven processing technique based on the gradient (i.e., a first order derivative) and a normalization factor or coefficient, with the normalization factor or coefficient being dependent on one, several, or all of the following parameters of the vehicles in the fleet, determined based on the vehicle operation related data: road inclination; gross vehicle weight; vehicle load weight. Optionally, the normalization factor or coefficient may be further dependent on one, several, or all of the following parameters of the vehicles in the fleet, determined based on the vehicle operation related data: road condition; time of day; vehicle type.

Thereby, the data-driven processing technique may be determined in a manner that is particularly robust for determining an appropriate gear selection or gear shift, taking into account how variations of vehicle operation related data affect the gear selection and/or gear shifting operation that is most useful to lower energy consumption.

Preferably, the generating method may comprise obtaining part of the vehicle operation related data responsive to an ignition of a vehicle in the fleet being turned on (e.g., only once per ignition cycle), and using the part that is determined on a per ignition cycle basis to generate the model data specifying the data-driven processing technique.

Thereby, parameters that do not change or change slowly during operation of the vehicles in the fleet can be ascertained once per ignition cycle and used to determine the model data specifying the data-driven processing technique. Communication bandwidth requirements on a vehicle data bus are reduced by retrieving the parameter values once per ignition cycle.

Preferably, the part of the of the vehicle operation related data obtained responsive to the ignition of the vehicle in the fleet being turned on (e.g., only once per ignition cycle) and used to generate the model data specifying the data-driven processing technique may comprise one, several, or all of: a weight of a vehicle load of the vehicle; a gross vehicle weight of the vehicle; the driver identifier; a fuel level; a vehicle type identifier.

Thereby, parameter values that do not change or change slowly during vehicle operation but still impact the gear selection or gear shift that results in more energy efficient vehicle operation can be ascertained and used to determine the model data specifying the data-driven processing technique.

The fleet of vehicles may comprise a fleet of utility vehicles.

Thereby, the data-driven processing technique is configured for use with utility vehicles during inference, i.e., when determining the vehicle transmission related data during inference.

According to a further aspect of the invention, there is provided a fleet management system comprising a fleet management system interface configured to obtain vehicle operation related data and at least one processing circuit configured to perform the generating method according to any aspect or embodiment disclosed herein.

Thereby, the effects discussed in association with the generating method can be attained by the fleet management system.

According to a further aspect of the invention, there is provided a vehicle control method. The vehicle control method comprises receiving, by a utility vehicle, the model data specifying the data-driven processing technique determined using the generating method according to any aspect or embodiment; and using the model data specifying the data-driven processing technique to process measurements obtained from at least one CAN of the vehicle (e.g., an AMT CAN and/or a vehicle CAN) to determine a gear selection and/or gear shifting operation that reduces energy consumption, and to perform at least one control action based thereon.

Various technical effects and advantages are associated with the vehicle control method. The vehicle control method comprises performing a control action based on the output provided by the data-driven processing technique during inference. Thereby, suitable control actions are identified in an objective manner using the data-driven processing technique.

According to another aspect of the invention, there is provided a vehicle (e.g., a utility vehicle). The vehicle comprises an interface and at least one ECU configured to communicatively interact with the interface to obtain parameter values of at least one vehicle parameter. The at least one ECU is configured to apply a data-driven processing technique to an input that is based at least on the parameter values, wherein the data-driven processing technique is configured to provide, as an output, vehicle transmission related data that are indicative of a gear selection and/or of a gear shifting operation for a vehicle transmission of the vehicle, the gear selection and/or the gear shifting operation being determined, using the data-driven processing technique, to enhance energy-efficiency of the vehicle operation. The at least one ECU is configured to cause or enable performance of at least one action based on the vehicle transmission related data.

Various technical effects and advantages are attained by the vehicle. The ECU is configured to determine the vehicle transmission related data that enhance energy-efficiency of the vehicle operation. Thereby, the vehicle contributes to reducing energy consumption and contributes to energy efficiency in vehicle operation. Increased energy efficiency contributes to reducing environmental footprint as well as other benefits for operators. With stringent regulatory requirements concerning emissions, the adoption of energy-efficient technologies allows vehicle operators to reduce energy consumption while complying with regulatory standards. As a consequence, the vehicle contributes to a more sustainable future by promoting cleaner air, and reducing dependence on fossil fuels.

The vehicle is configured to apply a data-driven processing technique to determine the vehicle transmission related data, thereby reducing the risk of human-induced error when determining the gear selection and/or the gear shifting operation that is appropriate in the interest of energy efficiency. The data-driven processing technique is based on processing parameter values (such as gradients, activation function parameters of a machine learning model, decision boundaries of a principal component analysis or support vector machine) that are set based on measurements obtained from a fleet of vehicles. Thus, the vehicle transmission related data is determined using objective criteria, established in a data-driven manner in the data-driven processing technique. The vehicle is configured to enhance energy efficiency in vehicle operation, thereby significantly curbing greenhouse gas emissions and contributing to broader environmental and economic goals. This approach not only aligns with global efforts to combat climate change but also enhances the overall performance and viability of utility vehicles in an increasingly eco-conscious marketplace.

Optional features of the vehicle and the effects attained thereby correspond to the features and effects discussed in association with the method of supporting vehicle operation.

The vehicle may be configured to perform the method of supporting vehicle operation according to any aspect or embodiment disclosed herein.

According to a further aspect of the invention, there is provided a system that comprises a utility vehicle and a fleet management system, wherein the utility vehicle is the vehicle according to any aspect or embodiment disclosed herein and/or wherein the fleet management system is the fleet management system according to any aspect or embodiment disclosed herein.

According to a further aspect of the invention, there is provided a machine-readable instruction code which, upon execution by at least one programmable circuit (e.g., at least one ECU of a vehicle and/or at least one processing circuit of a fleet management system), causes the at least one programmable circuit to perform the method or generating method of any aspect or embodiment.

The effects and advantages attained by the machine-readable instruction code correspond to the effects and advantages disclosed in association with the method.

According to a further aspect of the invention, there is provided a non-transitory storage medium having stored thereon machine-readable instruction code which, upon execution by at least one programmable circuit (e.g., at least one ECU of a vehicle and/or at least one processing circuit of a fleet management system), causes the at least one programmable circuit to perform the method or generating method of any aspect or embodiment.

The effects and advantages are attained by the non-transitory storage medium correspond to the effects and advantages disclosed in association with the method.

Various effects and advantages are attained by embodiments of the invention. The methods and vehicle according to embodiments are configured to contribute to reducing energy consumption by supporting vehicle transmission related actions, such as gear selection and/or gear shifting operations.

Further advantages and embodiments and developments are defined in the depended claims. These and other aspects of the invention will be apparent from and explained in more detail with reference to the embodiments described hereafter with reference to the accompanying drawings, in which:
Fig. 1 shows a schematic representation of a vehicle according to an embodiment;
Fig. 2 shows a schematic representation of a system comprising the vehicle according to an embodiment and a fleet management system;
Fig. 3 shows a schematic block diagram representation of the fleet management system of the system of Fig. 2;
Fig. 4 shows a schematic representation of a system comprising the vehicle according to an embodiment and the fleet management system;
Fig. 5 shows a schematic representation of parameter of the vehicle as a function of driving distance;
Fig. 6 is a flow chart of a method of supporting vehicle operation according to an embodiment;
Fig. 7 shows a schematic representation of parameter value measurements as a function of driving distance;
Fig. 8 shows a schematic representation of an ECU of the vehicle according to an embodiment;
Fig. 9 shows a schematic representation of a HMI of the vehicle according to an embodiment;
Fig. 10 shows a further schematic representation of a HMI of the vehicle according to an embodiment;
Fig. 11 schematically illustrates processing of parameter values using a data-driven processing technique of the vehicle according to an embodiment;
Fig. 12 schematically illustrates processing of parameter values using another data-driven processing technique of the vehicle according to an embodiment;
Fig. 13 is a flow chart of a generating method of generating model data specifying the data-driven processing technique;
Fig. 14 is a signaling diagram for a system comprising the fleet management system configured to generate the generating model data specifying the data-driven processing technique;
Fig. 15 is a signaling diagram for a system comprising the fleet management system and the vehicle according to an embodiment;
Fig. 16 is a further signaling diagram for a system comprising the fleet management system and the vehicle according to an embodiment;
Fig. 17 is a schematic representation of a network of navigable segments;
Fig. 18 is a flow chart of a method of using a data-driven processing technique generated by the fleet management system according to an embodiment.

Embodiments of the invention will be described with reference to the drawings. In the drawings, similar or identical reference signs designate elements with similar or identical configuration and/or function.

To avoid repetition in the Figures and the description of the various aspects and illustrative embodiments, it is be understood that various features are common to several aspects and embodiments. Omission of an aspect from a description or Figure does not imply that the aspect is missing from embodiments that incorporate that aspect.

Embodiments of the invention relate to techniques (in particular to methods and vehicles) that are useful in association with gear shifting and/or gear selection in vehicles, in particular utility vehicles. The techniques disclosed herein are configured to mitigate the risk that a gear selection and/or gear shifting operation contributes to unnecessarily high energy consumption, taking into consideration the respective operation condition of the vehicle.

As used herein, the term "utility vehicle" refers to a motorized road vehicle designed primarily for the transport of goods, materials, or passengers, as well as for performing specific functions or tasks associated with commercial, agricultural, construction, or industrial applications. The term "utility vehicle" vehicle types including, but not limited to: trucks; vans; tractors; specialized equipment, which may be equipped with various tools or attachments to enhance their operational capabilities.

As used herein, the term "vehicle transmission" refers to a mechanical or electromechanical system comprising a gear set in which gears can be selectively brought into and out of engagement with each other to enable a transfer of torque from an engine to wheels of a vehicle. The vehicle transmission comprises a gear set that enables the selection and shifting of different gear ratios. The vehicle transmission allows an adjustment of engine torque and speed to match varying driving conditions and performance requirements. The vehicle transmission may include components such as the gearbox, clutch, and associated linkages, and can be configured in various forms, including manual, automatic, or electronically controlled systems.

As used herein, the term "automated manual transmission" (AMT) refers to a type of vehicle transmission system that combines features of a manual transmission with automated controls to facilitate gear shifting without a need for direct driver intervention. In an AMT, gear changes are executed automatically using an electronic control unit (ECU), which manages the engagement and disengagement of the clutch and the selection of gears based on parameters such as, e.g., vehicle speed, engine load, and other operational parameters. The AMT is particularly suited for utility vehicles, where it enhances operational efficiency and user-friendliness by enabling smoother transitions between gears, reducing driver fatigue, and optimizing power delivery under varying load and terrain conditions."

As used herein, an "electronic control unit" (ECU) is an embedded processing device within a vehicle, responsible for managing and controlling a vehicle system. The ECU processes input from various sensors and user interfaces. The term ECU encompasses a telematics ECU and an AMT ECU, without being limited thereto.

As used herein, a "telematics ECU" refers to an ECU configured to perform data communication between the vehicle and a system external to the vehicle. The telematics ECU may be configured to provide or enable capabilities such as navigation, remote diagnostics, vehicle tracking, and/or real-time data transmission for fleet management. The telematics ECU may comprise or may communicatively interact with a wireless interface of the vehicle for transmitting data to and/or receiving data from a fleet management system.

As used herein, a "tachograph" refers to specialized electronic or electromechanical device installed in utility vehicles, such as trucks and buses, to automatically record information related to the vehicle's operation. The tachograph is configured to track and document data such as the vehicle's speed, distance traveled, and the work and rest periods of drivers. The tachograph may be configured to ensure compliance with regulations governing driving hours and to enhance road safety by preventing driver fatigue. The tachograph may be an analog tachograph or a digital tachograph. The tachograph may preferably be a digital tachograph, which provides ease of data communication between the tachograph and the telematics ECU. The digital tachograph provides enhanced accuracy and ease of data retrieval and analysis.

As used herein, a "driver identifier" refers to a code or serial number that is assigned to a specific driver and is recorded by the tachograph. The driver identifier may be a unique driver identifier in the sense that each driver identifier is associated with a single one of drivers operating vehicles of a fleet of vehicles. This driver identifier may be transmitted via the vehicle's data bus and/or via an interface of the telematics ECU. In terms of functionality, the driver identifier allows for the tracking and verification of driving activities associated with that driver. It aids in ensuring compliance with regulations regarding driving hours and rest periods by linking recorded data on vehicle operation directly to the individual driver operating the vehicle.

As used herein, a "fleet management system" refers to a system comprising one or several processing circuits configured for management and coordination of a fleet of vehicles. The fleet management system may be configured for performing vehicle tracking, monitoring, and maintenance scheduling, as well as route optimization and driver performance analysis. The fleet management system may be configured to leverage technologies such as Global Navigation Satellite System (GNSS)-based positioning, telematics, and data analytics to enable real-time communication and data exchange between vehicles and a fleet operator.

As used herein, a "data-driven processing technique" refers to a processing approach that is configured to analyze and derive insights from data collected from various sources, including measurements obtained aboard a vehicle. The data-driven processing technique is configured to process input to generate output, with the processing being dependent on model parameters of the data-driven processing technique. The model parameters are model parameters set based on vehicle operation related data from a fleet of vehicles. Thus, the model parameters are set in a data-driven manner. Examples of data-driven processing techniques comprise, without limitation: a support vector machine (SVM); an artificial intelligence (AI) model; a machine learning (ML) model; an artificial neural network (ANN) model; a recurrent neural network (RNN) model; a convolutional neural network (CNN) model; a data-driven processing technique configured to process sequence data, such as a data-driven processing technique comprising a gated recurrent unit (GRU) and/or a long-short term memory (LSTM) cell. The data-driven processing technique may also be implemented using a further processing technique configured to determine gear shifting and/or gear selection operations that contribute to lowering energy consumption, with the data-driven processing technique being dependent on vehicle operation related data collected from vehicles of a fleet of vehicles. As explained in more detail herein, the data-driven processing technique used in embodiments is configured to process input, which is based at least on parameter values obtained for a vehicle, to determine vehicle transmission related data that indicate or otherwise relate to a gear shifting and/or gear selection operation determined to be useful for lowering energy consumption.

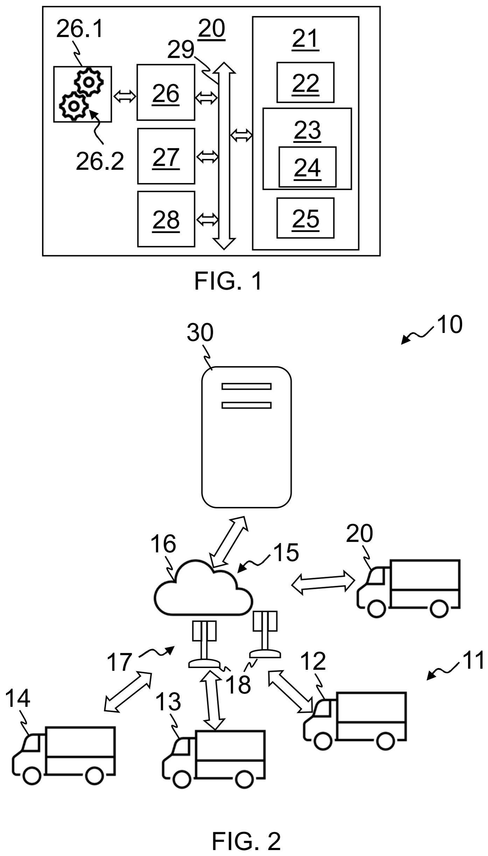

Fig. 1 shows a vehicle 20 according to an embodiment. The vehicle 20 may be a utility vehicle 20. The vehicle 20 may be a truck, a heavy-duty truck, a traction vehicle, or another utility vehicle. The vehicle 20 comprises a telematics ECU 21, a transmission CAN 26, a tachograph 27, and an HMI 28. The vehicle 20 may comprise a data bus 29. The vehicle 20 may be configured such that the telematics ECU 21 is configured to communicatively interface, via the data bus 29, with the transmission CAN 26, the tachograph 27, and the HMI 28. The data bus 29 may be the vehicle data bus. In other implementations, the vehicle 20 may be configured such that the telematics ECU 21 is configured to communicatively interface, via dedicated point-to-point data or signal lines, with the transmission CAN 26, the tachograph 27, and the HMI 28. The telematics ECU 21 may be configured to communicatively interface the vehicle 20 with at least a fleet management system. The transmission CAN 26 may be associated with a vehicle transmission 26.1 comprising a gear set 26.2. The vehicle transmission 26.1 is controllable to allow various gear ratios to be set for transferring torque from an engine of the vehicle 20 to wheels of the vehicle 20.

The telematics ECU 21 may be configured to obtain at least a driver identifier from the tachograph 27. The telematics ECU 21 may be configured to perform various actions, depending on the driver identity. The telematics ECU 21 may be configured to perform various actions, depending on whether the driver identity is indicative of the vehicle 20 being operated by a driver that needs support in determining vehicle transmission related operations that have the potential of reducing energy consumption. In response to determining, based on the driver identifier from the tachograph 27, that the vehicle transmission related data indicative of a gear selection and/or gear shifting operation is to be determined, the at least one ECU (e.g., the telematics ECU 21) may be configured to generate input for a data-driven processing technique 24 based at least on parameter values obtained for several parameters of the vehicle 20. The parameter values on which the input is based may comprise parameter values determined based on measurements (such as parameter values obtained by measurement of a wheel speed and/or a vehicle speed). The parameter values on which the input is based may comprise parameter values that need not be based on measurements, such as parameter values that may indicate a road type and/or a vehicle type. The data-driven processing technique is dependent on vehicle operation related data obtained from a fleet of vehicles. Thereby, the vehicle transmission related data indicative of a gear selection and/or gear shifting operation may be determined in an objective manner, based on observations collected from the fleet of vehicles. In response to determining, based on the driver identifier, that the vehicle 20 is operated by an experienced driver (e.g., by a driver having a number of operating hours and/or a number of years of driving experience that exceeds a threshold), the telematics ECU 21 may communicatively interface with the fleet management system to provide vehicle operation related data to the fleet management system. The fleet management system may be configured to determine and/or update the data-driven processing technique 24, based on the vehicle operation related data from the vehicle 20 and a plurality of other vehicles in the fleet that are respectively operated by experienced drivers (e.g., by drivers having a number of operating hours and/or a number of years of driving experience that exceeds a threshold).

The telematics ECU 21 may comprise at least one ECU circuit 23 configured to provide input for the data-driven processing technique 24 to generate vehicle transmission related data as output of the data-driven processing technique 24. The vehicle transmission related data determined by the data-driven processing technique 24 is indicative of a gear selection and/or gear shifting operation determined, by the data-driven processing technique 24, to be suitable to reduce energy consumption. The telematics ECU 21 may comprise a data interface 22. The data interface 22 is configured to communicatively interface the telematics ECU 21 with the data bus 29. The at least one ECU circuit 23 may be configured to communicatively interact with the data interface 22 to obtain parameter values of several vehicle parameters that have an effect on which gear selection and/or gear shifting operation provides reduced energy consumption. The at least one ECU circuit 23 may be configured to communicatively interact with the data interface 22 to obtain, via the data bus 29, the driver identifier form the tachograph 27, and to obtain, via the data bus 29, the parameter values that are used to generate the input for the data-driven processing technique 24. The telematics ECU 21 may comprise one or several communication circuit(s) 25 different from the data interface 22. The one or several communication circuit(s) 25 may be configured to enable transmission of data from the vehicle 20 to the fleet management system and to enable receipt of data by the telematics ECU 21 from the fleet management system. The telematics ECU 21 may in particular be configured to interact with the one or several communication circuit(s) 25 to receive model data specifying the data-driven processing technique 24 from the fleet management system. The telematics ECU 21 may be configured to process parameter values obtained for the vehicle 20 during vehicle operation using the data-driven processing technique 24 as specified by the model data specifying the data-driven processing technique 24 received via the one or several communication circuit(s) 25. The one or several communication circuit(s) 25 may comprise at least one communication circuit configured for wireless communication over a cellular network, to enable transmission of data from the vehicle 20 to the fleet management system and to enable receipt of data by the telematics ECU 21 from the fleet management system.

The telematics ECU 21 is configured to perform at least one action based on the vehicle transmission related data determined using the data-driven processing technique 24. The telematics ECU 21 may be configured to control an HMI 28 of the vehicle 20. Alternatively or additionally, the telematics ECU 21 may initiate a data transmission, via the one or several communication circuit(s) 25, to the fleet management system based on the output of the data-driven processing technique 24. Alternatively or additionally, the telematics ECU 21 may adjust, via the data bus 29, operation of at least one other ECU different from the telematics ECU 21. For illustration, when the transmission 26.1 is configured as an AMT 26.1 having an AMT ECU, the telematics ECU 21 may be configured to adjust a decision logics of the AMT ECU based on the output of the data-driven processing technique 24.

To perform the various functions disclosed herein, the telematics ECU 21 may comprise one or several integrated circuits (ICs). The telematics ECU 21 may comprise any one or any combination of: a controller; a micro-controller; a processor; a micro-processor; field programmable gate arrays (FPGAs); an application specific integrated circuits (ASICs); quantum gates; a graphics processing unit (GPU); a tensor processing unit (TPU); a central processing unit (CPU).

Fig. 2 is a block diagram of a system 10 according to an embodiment. The system 10 comprises a fleet 11 of vehicles and a fleet management system 30. The fleet 11 comprises a plurality of vehicles (e.g., utility vehicles) 12, 13, 14 from which the fleet management system 30 obtains vehicle operation related data to generate a data-driven processing technique useful in identifying gear shifting and/or gear selection operations that contribute to energy efficient operation. The fleet 11 may comprise the vehicle 20. I.e., the vehicle 20 may be configured to provide vehicle operation related data to the fleet management system 30 for use in generating the data-driven processing technique, when the vehicle 20 is being operated by a driver determined to be experienced (e.g., based on his/her number of employment years; based on a number of operating hours on the respective vehicle type; or based on another objective criterion).

The fleet management system 30 is configured to obtain the vehicle operation related data from the plurality of vehicles 12, 13, 14 of the fleet 11. The vehicle operation related data comprises data indicative of gear shifting and/or gear selection operations recorded by at least some of the plurality of vehicles 12, 13, 14 of the fleet 11 as providing energy-efficient vehicle operation. The fleet management system 30 is configured to generate model data specifying the data-driven processing technique, using at least the vehicle operation related data. The fleet management system 30 is configured to generate the model data specifying the data-driven processing technique based on both data obtained from the fleet 11 (such as measurements obtained by sensors or other measurement instrumentation in the plurality of vehicles 12, 13, 14) and further based on data available locally at the fleet management system 30 and/or obtainable from other data resources. Examples for data that is available at the fleet management system 30 and useful for generating the data-driven processing technique include any one, any combination, or all of: vehicles types of each of the vehicles 12, 13, 14; gross weights of each of the vehicles 12, 13, 14; loads of each of the vehicles 12, 13, 14. Examples for data that is obtainable from other data resources and useful for generating the data-driven processing technique include any one, any combination, or all of: road types of roads on which the vehicles 12, 13, 14 are located; road conditions (such as weatherdependent road conditions).

The fleet management system 30 is configured to generate the model data specifying the data-driven processing technique such that the data-driven processing technique processes input to provide, as output, vehicle transmission related data that indicates a gear shifting and/or gear selection operation that, when performed, contributes to energy efficient operation. The fleet management system is configured to provide the model data specifying the data-driven processing technique to the vehicle 20. The vehicle 20 comprises at least one ECU (e.g., a telematics ECU) configured to generate input to be processed by the data-driven processing technique and to use the data-driven processing technique to determine the gear shifting and/or gear selection operation that, when performed, contributes to energy efficient operation.

The system 10 comprises a communication system 15. The communication system 15 may comprise a wide area network (WAN) 16, e.g., the internet 16, and/or a cellular communication system 70 comprising base stations 18. The fleet management system 30 may be configured to obtain part or all of the vehicle operation related data from the fleet 11 over the communication system 15. The fleet management system 30 may be configured to obtain part or all of the vehicle operation related data by querying the plurality of vehicles 12, 13, 14 of the fleet 11 over the communication system 15 and receiving at least part of the vehicle operation related data responsive thereto. The fleet management system 30 may alternatively or additionally be configured to obtain part or all of the vehicle operation related data from the fleet 11 by a push mechanism, in which the plurality of vehicles 12, 13, 14 provide part or all of the vehicle operation related data to the fleet management system by a push mechanism. The fleet management system 30 may be configured to communicatively interface with data resources other than the fleet 11 when generating the model data specifying the data-driven processing technique. For illustration, the fleet management system 30 may be configured to communicatively interface with a map data server to obtain data specifying a road type (e.g., by specifying a type of road surface) and/or with a weather service server to obtain data specifying weather conditions (e.g., by specifying humidity, precipitation, and/or temperature).

The fleet management system 30 may be configured to provide the model data specifying the data-driven processing technique to the vehicle 20 over the communication system 15. The vehicle 20 may be configured to receive the model data specifying the data-driven processing technique over the communication system 15. The telematics ECU 21 of the vehicle 20 may be configured to apply the data-driven processing technique to inputs generated based at least on parameter values of vehicle parameters related to the vehicle 20 to determine which gear selection and/or gear shifting operation may be appropriate for operating the vehicle 20 in an energy-efficient manner.

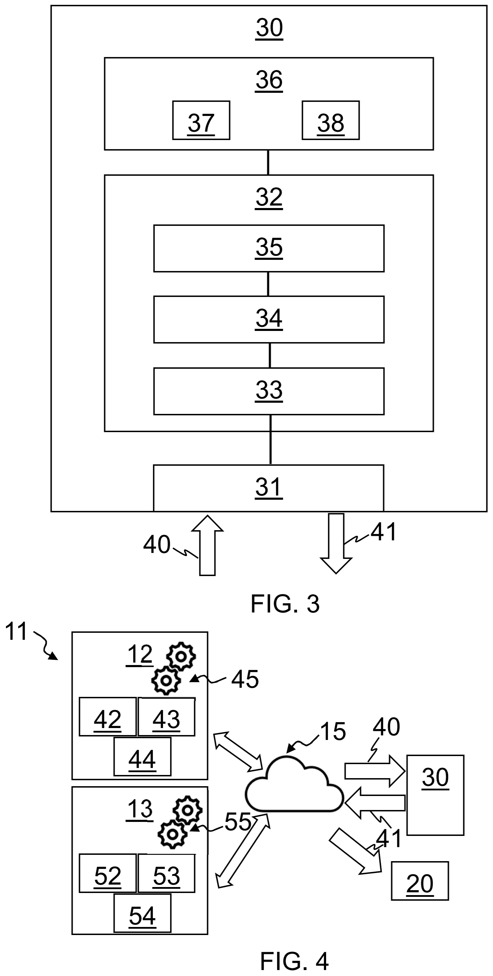

Fig. 3 is a schematic block diagram representation of the fleet management system 30. The fleet management system 30 comprises a data communication interface 31. The data communication interface 31 may be configured to communicatively interface with each of the plurality of vehicles 12, 13, 14 of the fleet 11. The data communication interface 31 may be configured to receive the vehicle operation related data from the plurality of vehicles 12, 13, 14 of the fleet 11. The data communication interface 31 may be configured to interact with data resources different from the fleet 11, such as a map data server and/or a weather data server, to part of the vehicle operation related data used to generate model data 41 specifying the data-driven processing technique. The fleet management system (FMS) 30 comprises one or several FMS processing circuit(s) 32 and a storage system 36. The storage system 36 may have stored therein fleet data 37. The fleet data 37 may define, for each of the plurality of vehicles 12, 13, 14 of the fleet 11, a vehicle type. The fleet data 37 may optionally comprise additional data, such as a gross weight and/or a load weight for each of the plurality of vehicles 12, 13, 14 of the fleet 11. The at least one FMS processing circuit 32 is configured to generate, based at least on the vehicle operation related data 40, the model data 41 specifying the data-driven processing technique, which is configured to provide vehicle transmission related data indicative of a gear shifting and/or gear selection operation that contributes to energy efficient vehicle operation. The vehicle operation related data 40 may comprise driver identifiers for the drivers of the vehicles 12, 13, 14 of the fleet, and may further comprise any one, any combination, or all of: vehicle speed; wheel speed; engine speed (e.g., rotations per minute (RPM)); accelerator pedal position; brake pedal position; clutch Position; clutch switch; current gear position; selected gear; Anti-lock Braking System (ABS) activation; Automatic Traction Control (ATC) activation; Roll Stability Control (RSC) activation; Yaw Control activation; road inclination; road condition; with the input being based on the gradient(s).

The at least one FMS processing circuit 32 may comprise a training feature generator 33 configured to generate, based on the vehicle operation related data 40, training data for determining model parameters of the data-driven processing technique. The training feature generator 33 may be configured to generate derivatives, such as gradients (i.e., first order derivatives) for at least some of the parameters obtained in the vehicle operation related data 40. The fleet management system 30 may be configured to generate the derivatives for use in generating the model data 41 specifying the data-driven processing technique selectively dependent on whether driver identifiers for drivers of the plurality of vehicles 12, 13, 14 fulfil a predetermined or configurable criterion (e.g., a driver having at least a threshold number of years of experience and/or of operation hours on the respective vehicle type). The fleet management system 30 may be configured to obtain, from the vehicle operation related data, driver identifiers for drivers of vehicles in the fleet 11 of vehicles. Obtaining the driver identifiers may comprise obtaining the driver identifiers from tachographs via telematics ECUs of the vehicles in the fleet 11 of vehicles. Responsive to a verification based on driver identifiers, the training feature generator 33 may be configured to determine one, several or all of the following measurements included in the vehicle operation related data 40 for the vehicles 12, 13, 14 in the fleet 11: vehicle speed; wheel speed (e.g., high resolution wheel speed); engine speed (e.g., RPM); accelerator pedal position; brake pedal position; clutch position. The fleet management system 30 may be configured to obtain these measurements in a recurrent manner, in particular in a spatially recurrent manner (e.g., periodically as a function of driving distance).

To generate the training data for determining model parameters of the data-driven processing technique, the training feature generator 33 may also be configured to determine the training data based on the gradient (i.e., a first order derivative) for one or several measurements obtained in the plurality of vehicles 12, 13, 14, and further based on a normalization factor or coefficient. The training feature generator 33 may be configured such that the normalization factor or coefficient being dependent on one, several, or all of the following parameters of the vehicles 12, 13, 14 in the fleet 11: road inclination; gross vehicle weight; vehicle load weight. Optionally, the normalization factor or coefficient may be further dependent on one, several, or all of the following parameters of the vehicles in the fleet, determined based on the vehicle operation related data: road condition; time of day; vehicle type. These parts of the vehicle operation related data 40 may be obtained, at least in part, from data resources other than the fleet 11. In particular, the fleet management system 30 may be configured to communicatively interface with a data resource, which may comprise a map data server and/or a weather data server, to obtain part of the vehicle operation related data, which are then used to determine the normalization factor or coefficient by which gradient(s) of measurements reported by the vehicles 12, 13, 14 are scaled, e.g., by means of multiplication.

The at least one FMS processing circuit 32 may comprise a model parameter determination 34 configured to determine, based on the training data provided by the training data generator 33, model parameter values of the data-driven processing technique. The model parameter determination 34 may optionally be configured to also model hyperparameter values (e.g., a number of hidden layers of a data-driven processing technique that comprises a neural network (NN); a number of clusters of a data-driven processing technique that comprises a cluster analysis; etc.), but this is not required when the architecture of the data-driven processing technique is predefined and not subject to an optimization. The at least one FMS processing circuit 32 may perform determine the model parameter values of several model parameters of the data-driven processing technique such that the model parameter values minimize a target function. The target function may quantify a deviation (e.g., by quantifying the deviation as an L₂-norm or a L_{N}-norm of a difference) of (a) the gear selection and/or gear shifting operation output by the data-driven processing technique when implementing the data-driven processing technique with the mode parameter values, and (b) the gear selection and/or gear shifting operation determined, based on the vehicle operation related data 40, to provide energy efficient vehicle operation of the vehicles 12, 13, 14 of the fleet 11. The target function may be or may comprise a loss function of a machine learning (ML) model training. The target function may be or may comprise a residual of a physics informed ML model.

To determine the model parameter values that minimize the target function, the model parameter determination 34 may be configured to perform a search routine, e.g., by performing an optimizer configured to obtain the model parameter values that cause the output of the data-driven processing technique to represent, at least for most operation cases, the gear selection and/or gear shifting operation that contributes to energy efficient vehicle operation. For illustration, to determine the model parameter values that minimize the target function, the model parameter determination 34 may be configured to perform a gradient descent technique, without being limited thereto.

The at least one FMS processing circuit 32 may comprise an interface controller 35 configured to cause storage of the determined model parameter values as model data 38 in the storage system 38. The interface controller 35 may also be configured to control the data communication interface 31 to cause the model data 41 specifying the data-driven processing technique (as determined based on the vehicle operation related data 40 for the fleet 11) to be provided to the vehicle 20 for processing parameter values of vehicle parameters of the vehicle 20 to generate the vehicle transmission related data for enhancing energy efficiency during operation of the vehicle 20.

Fig. 4 is a schematic block diagram of the system 10 comprising the fleet 11 and the fleet management system 30 configured to communicatively interface with a plurality of vehicles 12, 13 of the fleet 11 to generate a data-driven processing technique for use by a vehicle 20 of the fleet 11. The plurality of vehicles 12, 13 comprises a first vehicle (e.g., a first utility vehicle) 12. The first vehicle 12 comprises a first transmission 45, a first telematics ECU 42, a first transmission ECU 43 configured to perform control and/or monitoring operations in association with the first transmission 45, and a first tachograph 44. The second vehicle 13 comprises a second transmission 55, a second telematics ECU 52, a second transmission ECU 53 configured to perform control and/or monitoring operations in association with the second transmission 55, and a second tachograph 54.

The first vehicle 12 is configured such that, responsive to an ignition of the first vehicle 12 being turned on, the first telematics ECU 42 communicatively interacts with the first tachograph 44 to obtain a first driver identifier for a first driver of the first vehicle 12. The fleet management system 30 is configured to obtain the first driver identifier, which may be included in the vehicle operation related data 40. The fleet management system 30 is configured to verify, based on the first driver identifier, whether the first driver has a level of experience that makes vehicle operation related data obtained from the first vehicle 12 suitable for use in generating the model data 41 specifying the data-driven processing technique. Such a verification may comprise a threshold comparison, in which a first number of years of experience and/or a first number of operating hours of the first driver of the first vehicle 12 is compared to a threshold. The first number of years of experience and/or the first number of operating hours of the first driver is data that is available to the fleet management system 30 and that can be retrieved from the storage system 36 of the fleet management system 30 responsive to and based on the first driver identifier.

The second vehicle 13 is configured such that, responsive to an ignition of the second vehicle 13 being turned on, the second telematics ECU 52 communicatively interacts with the second tachograph 54 to obtain a second driver identifier for a second driver of the second vehicle 13. The fleet management system 30 is configured to obtain the second driver identifier, which may be included in the vehicle operation related data 40. The fleet management system 30 is configured to verify, based on the second driver identifier, whether the second driver has a level of experience that makes vehicle operation related data obtained from the second vehicle 13 suitable for use in generating the data 41 specifying the data-driven processing technique. Such a verification may comprise a threshold comparison, in which a second number of years of experience and/or a second number of operating hours of the second driver of the second vehicle 13 is compared to the threshold. The second number of years of experience and/or the second number of operating hours of the second driver is data that is available to the fleet management system 30 and that can be retrieved from the storage system 36 of the fleet management system 30 responsive to and based on the second driver identifier.

The fleet management system 30 is configured to ascertain, based on driver identifiers obtained from the plurality of vehicles 12, 13 of the fleet 11, which drivers have sufficient experience for using the vehicle operation related data 40 from the respective vehicles 12, 13 to determine the model data specifying the data-driven processing technique. The fleet management system 30 may be configured to communicatively interface with the telematics ECUs 42, 52 of the plurality of vehicles 12, 13 to obtain measurements or other vehicle operation related data that are collected while the respective vehicles 12, 13 are in an ignition on state. The measurements or other vehicle operation related data may be collected in a recurrent manner and/or may be retrieved by the fleet management system 30 in a recurrent manner. The fleet management system 30 is configured to use the vehicle operation related data obtained from the vehicles 12, 13 to determine model data 41 of the data-driven processing technique 24. The fleet management system 30 is configured to communicatively interface, via the communication system, with the vehicle 20 (e.g., with the telematics ECU 21 of the vehicle 20) to provide the model data 41 of the data-driven processing technique 24 to the vehicle 20 for use in determining suitable gear shifting and/or gear selection operations that contribute to energy efficient operation of the vehicle 20.

The plurality of vehicles 12, 13 of the fleet may optionally comprise one or several vehicles having a vehicle transmission (such as the first vehicle transmission 45) that is not an automated vehicle transmission. The plurality of vehicles 12, 13 of the fleet may comprise one or several vehicles having an AMT (such as the second vehicle transmission 55). For the vehicles having an AMT that are included in the fleet 11, the fleet management system 30 may selectively discard vehicle operation related data collected in a time window around an automatic operation of the AMT. The fleet management system 30 is configured such that vehicle operation related data obtained from vehicles having a transmission that is not an AMT is treated differently and separately from the vehicle operation related data obtained from vehicles having an AMT. If vehicle operation related data from vehicles having an AMT are used (which is optional) for generating the model data 41, the fleet management system 30 is configured to give the vehicle operation related data from vehicles having a transmission other than an AMT (e.g., having a MT) greater weight when generating the model data. Thereby, the model data 41 may be established in a data-driven manner from an ensemble of vehicles operated by sufficiently experienced drivers. This mitigates the risk of sub-optimal decisions of a control logic adversely affecting the model data 41 of the data-driven processing technique 24.

Both when generating the model data 41 and when using the data-driven processing technique 24 during inference, derivatives (in particular derivatives of first order, i.e., gradients) may be determined for measurements or other signals data related to the vehicles. The determination of quantities that reflect spatial variations has turned out to be particularly useful for identifying gear shifting and/or gear selection operations that contribute to energy efficient vehicle operation.

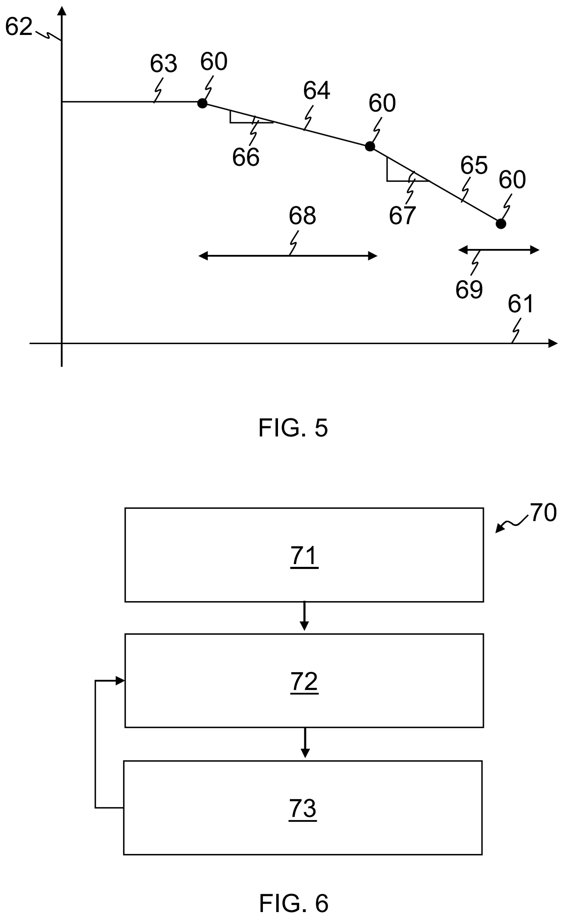

Fig. 5 illustrates the determination of gradients. The gradients may be determined by the telematics ECU 21 of the vehicle 20 during inference. Fig. 5 shows parameter values along a distance axis 61 and a vehicle parameter value axis 62. The parameter value 60 may be measured recurrently, in particular periodically, as a function of driving distance. The parameter value 60 may thus have several straight section portions 63, 64, 65. Generating input to the data-driven processing technique 24 during inference may comprise computing, by at least one ECU (e.g., the telematics ECU 21) of the vehicle 20, a gradient 66, 67 of the vehicle parameter value for each one of several segments of the curve that represents the parameter value as a function of driving distance. The measurements of the parameter value 60 may respectively be spaced by a measurement location spacing 68 which may be equidistant while the vehicle ignition is on. During inference, the gradients 66, 67 may be used as inputs to the data-driven processing technique. For generating the model data 41 of the data-driven processing technique 24, a similar technique may be used in which the gradients 66, 67 are determined to generate training data that is used to determine the model data 41 of the data-driven processing technique 24. Measurements obtained in a data discarding window 69 after an automatic control action (of, e.g., brakes of a vehicle of the fleet 11) may be discarded in this case, e.g., when determining the model data 28 specifying (e.g., parameterizing) the data-driven processing technique. While gradients are shown along the distance axis 61 for illustration, the gradients may be determined such that they reflect the interplay between a variation in a vehicle parameter and the gear shifting and/or gear shifting operation that results in energy efficiency improvement.

Fig. 6 is a flow chart of a method 70 of supporting vehicle operation to enhance energy efficiency of the vehicle operation. The method 70 may be performed automatically by or using the vehicle 20, in particular using the telematics ECU 21 of the vehicle 20, or by the system 10 comprising the vehicle 20 and the fleet management system 30 configured to generate the model data specifying the data-driven processing technique.

The method 70 comprises a process block 71 of obtaining, from the tachograph 27 of the vehicle 20, a driver identifier and processing the driver identifier. Process block 71 may be performed by the telematics ECU 21 responsive to an ignition of the vehicle being set to the on state. Process block 71 may comprise verifying, based on the driver identifier, that the data-driven processing technique 24 is to be applied to determine gear shifting and/or gear selection operations during vehicle operation to contribute to an energy efficient vehicle operation.

The method 70 comprises a process block 72 of obtaining, by the telematics ECU 21 and from at least one CAN of the vehicle 20, parameter values. The parameter values may comprise one, several, or all of: vehicle speed; wheel speed; engine speed (e.g., rotations per minute (RPM)); accelerator pedal position; brake pedal position; clutch position; clutch switch; current gear position; selected gear; Anti-lock Braking System (ABS) activation; Automatic Traction Control (ATC) activation; Roll Stability Control (RSC) activation; Yaw Control activation; road inclination; road condition. The process block 72 may comprise determining gradients of one, several or all of these parameter values.

The method 70 comprises a process block 73 of processing, by the telematics ECU 21, the obtained parameter values using the data-driven processing technique 24. The data-driven processing technique 24 provides, as output, the vehicle transmission related data, which are indicative of a gear switching and/or gear selection operation that is beneficial for reducing energy consumption. The process block 73 may further comprise performing at least one action, e.g., a HMI control action and/or another control action, based on the vehicle transmission related data.

The process blocks 72 and 73 may be repeated continually, i.e., in an ongoing manner, while the ignition of the vehicle is in the on state. The process blocks 72 and 73 may be repeated in a manner that is periodic as a function of driving distance.

Turning the ignition to an off state causes the repetitions of process blocks 72 and 73 to be stopped.

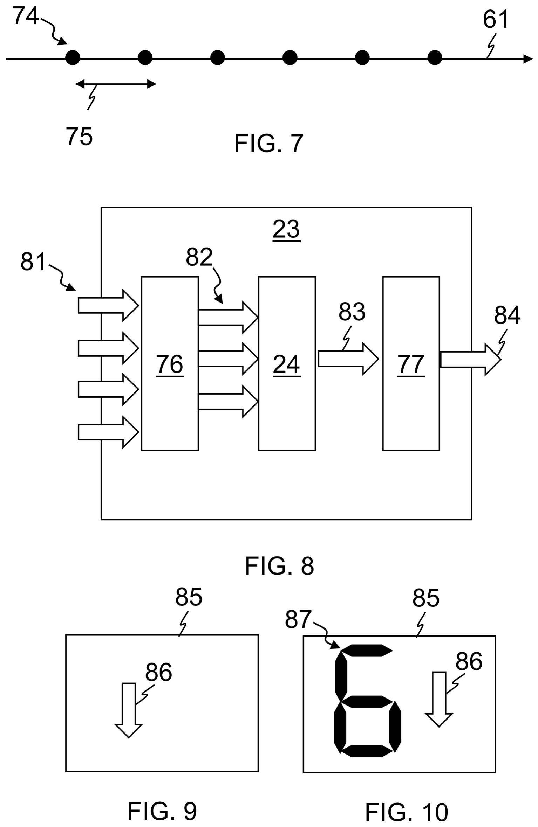

Fig. 7 illustrates operation of the vehicle 20 for obtaining the parameter values that are processed using the data-driven processing techniques. The parameter values may be obtained recurrently at a plurality of measurement locations 74. The measurements locations 74 may be equally spaced by a measurement location spacing 75. The vehicle 20 may process the parameter values obtained at the measurement locations 74 to determine the vehicle transmission related data as output of the data-driven processing technique.

Fig. 8 is a schematic block diagram to further illustrate operation of at least one ECU, such as the telematics ECU 21 of the vehicle 20. The at least one ECU comprises the at least one processing circuit 23. The at least one processing circuit 23 is configured to process the parameter values using the data-driven processing technique 24. The at least one processing circuit 23 may be configured to provide an input generator 76 that processes the parameter values 81 to generate inputs 82 to the data-driven processing technique 26. The input generator 76 may be configured to determine gradients, in particular spatial gradients, of the parameter values 81 obtained at different measurements locations 74 to generate the inputs 82. The data-driven processing technique 24 is configured to processes the inputs 82 to thereby generate output 83. The output 83 indicates the gear selection and/or gear shifting operation that, given the parameter values 81 and the inputs 82 generated therefrom, is determined to be beneficial for energy efficient vehicle operation. The at least one processing circuit 23 comprises an output controller 77 configured to generate and output a control signal and/or control data 84 in dependence on the output 83. The control signal and/or control data 84 may comprise an HMI control signal and/or HMI control data for controlling an HMI. The HMI may comprise a vehicle HMI that is installed locally in the vehicle 20. The HMI may comprise an HMI of the fleet management system. Alternatively or additionally, the control signal and/or control data 84 may comprise a control signal or control data that modifies operation of an AMT ECU of the AMT CAN 26.

Fig. 9 and Fig. 10 illustrate an implementation of an HMI 85 of the vehicle 20. The at least one processing circuit 23 may be configured to control the HMI 85 based on the vehicle transmission related data provided by the data-driven processing technique 24. The at least one processing circuit 23 may be configured to cause outputting of a graphical element 86 and/or of a numerical value 87 via the HMI 85. The HMI may comprise a visual output device, an audio output device, or a combination thereof. In particular, output that depends on the gear selection and/or gear shifting operation determined to provide energy efficient operation may be provided via a visual output device (such as a display), an audio output device, or both.

The data-driven processing technique 24 may have a variety of different implementations. Preferably, the data-driven processing technique 24 is configured to process inputs that are based on (e.g., that comprise) gradients of vehicle parameters measured while the ignition of the vehicle 20 is on. The data-driven processing technique 24 may be configured to provide, as output, at least one numerical value that indicates a gear selection and/or gear shifting operation that is determined, by the data-driven processing technique 24 and based on the vehicle operation relate data collected from the fleet 11, to result in energy efficient operation. This may be attained in various ways. For illustration, the data-driven processing technique may be implemented as or may comprise a support vector machine (SVM), a principal component analysis (PCA), an ANN (e.g., a convolutional neural network (CNN) and/or recurrent neural network (RNN)), a gated recurrent unit (GRU), a long short term memory (LSTM) cell, a transformer model comprising one or several attention mechanisms, and/or another ML model. The model data 41 may respectively define how the data-driven processing technique 24 processes the inputs into the output. The specific implementation of the model data 41 may vary depending on the configuration of the data-driven processing technique 24. In any case, the model data 41 are based on the vehicle operation related data 40 acquired from the fleet 40. For a data-driven processing technique 24 that is based on a SVM and/or PCA, the model parameters may define decision boundaries between different regions in a multi-dimensional space, each of which is assigned to a gear shifting and/or gear selection operation. For a ML model comprising an ANN, a GRU, or a LSTM, the model data 41 may specify one, several or all of: biases, activation functions), parameter values such as biases, activation functions, update gate vectors, reset gate vectors, without being limited thereto.

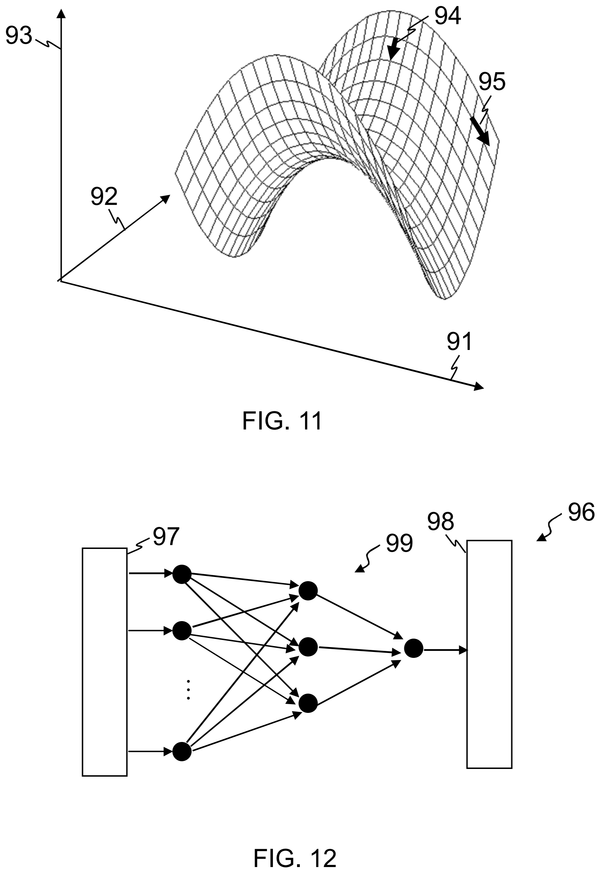

Fig. 11 is a schematic representation of a multi-dimensional space spanned by a plurality of axes 91, 92, 93, with only three of the coordinate axes 91, 92 being schematically illustrated in Fig. 11. When generating the data-driven processing technique 24, the fleet management system 30 may determine gradients 94, 95 that define which changes (e.g., gear shifting and/or gear selection operations) affect energy consumption so as to lower energy consumption and increase energy efficiency. The gradients 94, 95 may be determined for plural vehicles 12, 13 in the fleet 11 and may then be averaged. The resultant gradients 94, 95 can be used onboard the vehicle 20 for determining which gear shifting and/or gear selection operations contribute to lower energy consumption.

Fig. 12 is a schematic representation of an ANN 96. The data-driven processing technique 24 may comprise or may be the ANN 96. The ANN comprises an input layer 97. The input layer 97 is configured to receive input data that are based on the parameter values of the vehicle parameters of the vehicle 20. The ANN 96 comprises one or several hidden layers 99. The ANN 96 comprises an output layer 98. The output layer 98 is configured to output the vehicle transmission related data. When generating the data-driven processing technique 24, the fleet management system 30 may determine model parameter values of the ANN 96, such as biases, without being limited thereto. The model data 41 may comprise data specifying trainable parameter model parameter values of the ANN 96. During inference, the at least one ECU (e.g., the telematics ECU 21) of the vehicle 20 may use the model data 41 to determine, based on the input 82 that is dependent on the parameter values of the vehicle parameters captured while the ignition is on, which gear selection and/or gear shifting operation is expected to lead to energy efficient operation.

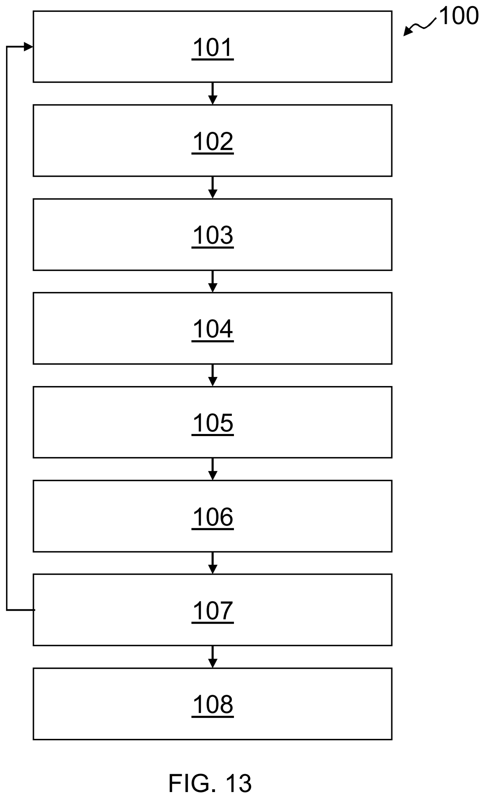

Fig. 13 is a flow chart of a method 100. The method 100 may be performed automatically by or using the fleet management system 30, or by the fleet management system 30 in combination with the plurality of vehicles of the fleet 11.

The method 100 comprises a process block 101 of obtaining, for a plurality of vehicles of the fleet 11, vehicle operation related data. The vehicle operation related data comprise one, several, or all of: vehicle speed; wheel speed; engine speed (e.g., RPM); accelerator pedal position; brake pedal position; clutch Position; clutch switch; current gear position; selected gear; ABS activation; ATC activation; RSC activation; Yaw Control activation; road inclination; road condition; with the input being based on the gradient(s). These parameter values may be obtained in a recurrent manner (e.g., periodically), as previously discussed. The parameter values may be obtained from at least some vehicles in the fleet 11 that have a vehicle transmission different from an ATM.

The method comprises a process block 102 of obtaining, for the plurality of vehicles of the fleet 11, vehicle operation related data that remain the same for each ignition cycle. These vehicle operation related data may be obtained once per ignition cycle for each of the plurality of vehicles in the fleet 11. The vehicle operation related data that remain the same for each ignition cycle may comprise one, several, or all of: a weight of the load; gross vehicle weight; driver identifier; fuel level and/or battery state of charge (SOC); vehicle type.

The method comprises a process block 103 of selectively discarding vehicle operation related data within a data discarding window around automatic control actions in the vehicle of the fleet 11 to which the respective vehicle operation related data pertain. The data discarding window may extend to both a time period prior to and a further time period after an automatic control action. The time period and the further time period may have equal durations, e.g., of 1 s or more, 2 s or more, without being limited thereto.

The method comprises a process block 104 of determining gradients (i.e., derivatives of first order) for at least some of the different quantities included in the vehicle operation related data. Process block 104 may comprise determining gradients of one, several, or all of: vehicle speed; wheel speed; engine RPM; accelerator pedal position; brake pedal position; clutch position. These parameter values may be determined for the most energy efficient (e.g., fuel efficient) ranges indicated by the vehicle operation related data. The determination of the gradients may be performed by the fleet management system 30 or by the vehicle of the fleet 11 from which the vehicle operation related data are obtained.

The method comprises a process block 105 of associating the gradients with each of several gear numbers. Thereby, the gradients can be categorized for each gear number.

The method comprises a process block 106 of normalizing the gradients for one, several, or all of the following quantities: road inclination; road condition; time of day; vehicle type; vehicle load or vehicle gross weight. Process block 106 may comprise communicatively interfacing, by the fleet management system 30, with one or several data resources (such as an map data server and/or a weather data server) to obtain the road inclination and the road condition.

The method comprises a process block 107 of determining whether the process block 101 to 106 are to be repeated for any vehicle in the fleet 11 that was not yet considered. Depending on the determination, process blocks 101 to 106 may be repeated.

The method comprises a process block 108 of aggregating the gradients obtained for the various vehicles in the fleet 11. Process block 108 may comprise averaging the gradients to determine the model data 41 specifying the data-driven processing model. Process block 108 may comprise providing the model data 41 to the vehicle 20 for use in inference.

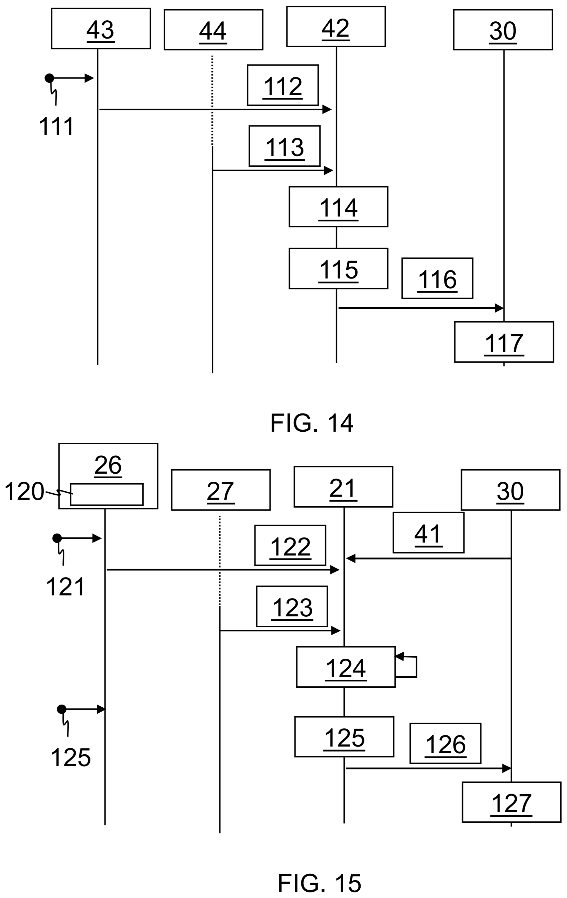

Fig. 14 is a signaling diagram that illustrates generation of the model data 41. Responsive to an ignition on signal 111 of a first vehicle 12 of the fleet 11, the first telematics ECU 42 is configured to obtain vehicle operation related data 112 from the first transmission ECU 43. Responsive to the ignition on signal 111, the first telematics ECU 42 is configured to obtain the driver identifier 113 from the tachograph 44. The first telematics ECU 42 may be configured to perform a parameter value derivative determination 114, which may comprise determining gradients based on the quantities indicated by the vehicle operation related data. The first telematics ECU 42 may be configured to detect a communication operation trigger 115. The communication operation trigger 115 may comprise a trigger internal to the vehicle (such as the ignition being switched off) and/or receipt of a request or other communication from the fleet management system 30. Responsive to the communication operation trigger 115, the first telematics ECU 42 is configured to transmit the derivatives 116 of the quantities indicated by the vehicle operation related data, optionally also other data included in or derived from the vehicle operation related data 112. The fleet management system 30 is configured to process the derivatives 116 to perform a model data determination 117 in which the model data 41 specifying the data-driven processing technique 24 are derived.

Fig. 15 is a signaling diagram that illustrates use of the model data 41 by the vehicle 20. The signaling diagram of Fig. 15, which relates to use of the data-driven processing technique 24 during inference, may be combined with the signaling diagram of Fig. 14, which relates to the generation of the data-driven processing technique 24. The telematics ECU 21 is configured to receive the model data 41. Responsive to an ignition on signal 121 of the vehicle 20, the telematics ECU 21 is configured to obtain parameter values 122 of vehicle parameters from a transmission ECU 120 of the transmission CAN. Responsive to the ignition on signal 121, the telematics ECU 21 is configured to obtain the driver identifier 123 from the tachograph 27. The telematics ECU 21 is configured to verify, based on the driver identifier 123, that the vehicle transmission related data is to be determined. The telematics ECU 21 is configured to perform a processing 124 of the parameter values 122 using the data-driven processing technique 24. The processing 124 may comprise generating inputs to the data-driven processing technique 24 based on the parameter values 122, to generate the vehicle transmission related data as output of the data-driven processing technique 24. The telematics ECU 21 may be configured to perform a control action 125 based on the vehicle transmission related data. The control action 125 may comprise controlling an HMI, which may be installed locally in the vehicle. The control action 125 may also comprise other control actions, as will be described in more detail with reference to Fig. 15. The telematics ECU 21 may be configured such that the control action 125 comprises a transmission of report data 126 to the fleet management system 30. The report data 126 may be dependent on the vehicle transmission related data generated using the data-driven processing technique in the processing operation 124. The report data 126 may be dependent on a deviation of gear selection and/or gear shifting operation(s) as performed by the driver of the vehicle 20, as compared to the gear selection and/or gear shifting operation(s) determined using the data-driven processing technique. The fleet management system 30 may be configured to perform a report data processing 127. The report data processing 127 may comprise controlling a fleet management system HMI to generate output based on the report data 126. The retrieval of the parameter values 122, the processing 124, and the control action may be repeated in a recurrent manner, e.g., periodically, until an ignition off signal 125 is detected by the telematics ECU 21. The telematics ECU 21 may be configured to cause transmission of the report data 126 responsive to the ignition off signal 125.

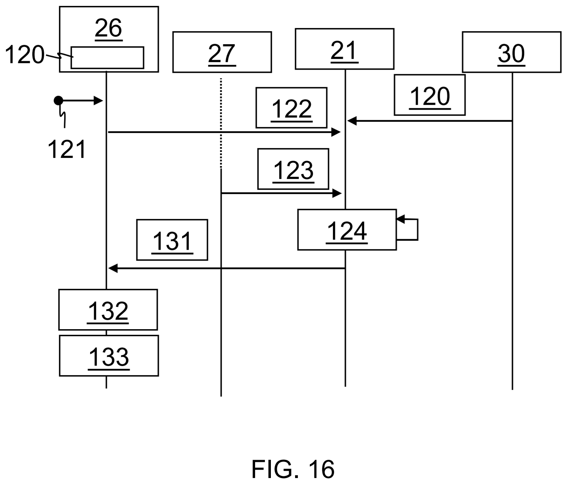

Fig. 16 is a signaling diagram that illustrates use of the model data 41 by the vehicle 20. The signaling diagram of Fig. 16, which relates to use of the data-driven processing technique 24 during inference, may be combined with the signaling diagram of Fig. 14, which relates to the generation of the data-driven processing technique 24. The signaling diagram of Fig. 16 may be used in combination with that of Fig. 15, such that both AMT adjustments and driver feedback are generated. Features already described in detail with reference to Fig. 15 are designated with the same reference signs as in Fig. 15. The telematics ECU 21 may be configured to generate AMT adjustment control data 131 to adjust operation of the AMT ECU 120, based on the results of the processing 124. The vehicle 20 may be configured such that an AMT adjustment 132 is performed based on the AMT adjustment control data 131. The AMT adjustment 132 may represent an adjustment (such as a fine-tuning) of the logics by which the AMT ECU 120 performs vehicle transmission related operations to shift gears. The subsequent AMT operation 133 is performed with an AMT ECU 120 operating based on the AMT adjustment 132, which is in turn dependent on the vehicle transmission related data obtained by the processing 124.

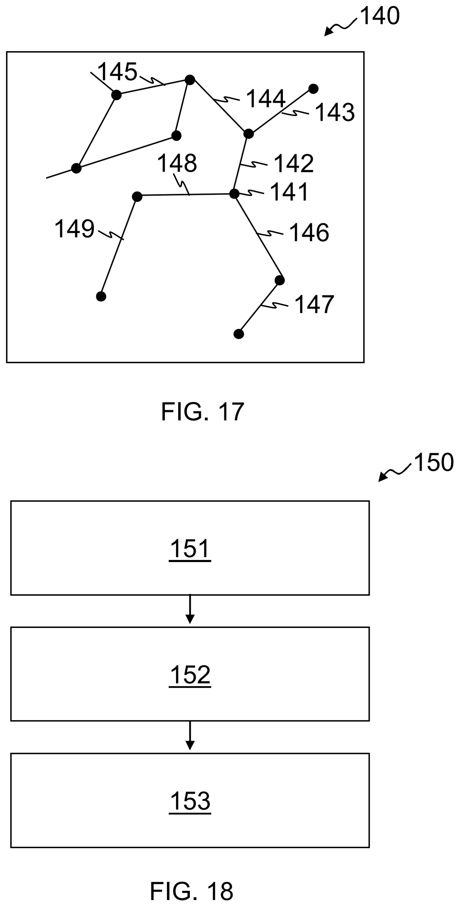

Fig. 17 is a schematic representation of an electronic map 140. The electronic map defines nodes 141 and edges 142 to 149. The edges 142 to 149 represent navigable segments 142 to 149. The fleet management system 30 may be configured to communicatively interface with a map data server storing the electronic map 140. The fleet management system 30 may be configured to determine, for road segments on which vehicles of the fleet 11 are located, at least a road inclination, optionally also a road surface type (e.g., road tar, gravel, or other). The fleet management system 30 may be configured to use the road inclination, and if applicable the road surface type, to generate the model data 41 specifying the data-driven processing technique 24. The vehicle 20 may optionally also be configured to communicatively interface with the map data server storing the electronic map data. The telematics ECU 21 may be configured to obtain, from the electronic map data stored by the map data server, road inclination data for use in determining the vehicle transmission related data that specify the gear shifting and/or gear selection operation to be performed for energy efficiency reasons.

Fig. 18 is a flow chart of a use method 150. The use method 150 may be performed automatically by or using the fleet management system 30 and/or the vehicle 20. The use method 150 may be a method of using vehicle operation related data collected from the fleet 11 to enhance energy efficiency in operation of the vehicle 20.

The use method 150 comprises a process block 151 of obtaining a data-driven processing technique 24, which is based on the vehicle operation related data collected from the fleet 11.

The use method 150 comprises a process block 152 of obtaining, while an ignition of the vehicle 20 is on, parameter values of vehicle parameters and using the data-driven processing technique 24 to process the parameter values to determine a gear shifting and/or gear selection operation that results in optimum (i.e., lowest) energy consumption.

The use method 150 comprises a process block 153 of performing at least one control action based on the gear shifting and/or gear selection operation determined using the data-driven processing technique 24. The at least one control action may comprise an HMI control action and/or an adjustment of an AMT control logic.

Various effects and advantages are attained by embodiments of the invention. For illustration, the fleet management systems, vehicles, and methods are configured to contribute to reduced energy consumption in association with utility vehicle operation. As compared to techniques in which a human coach provides advice to a driver, the techniques disclosed herein are based on objective criteria and allow an evaluation during an ongoing driving session. Due to the processing of the data-driven processing technique 24 at and by the fleet management system, the model data 41 that specify the data-driven processing technique do not include any information that can be traced back to any individual driver whose driving contributed to the generation of the model data 41. Thereby, data privacy can be safeguarded even when deploying the data-driven processing technique 24 more widely. The data-driven processing technique 24 may be implemented as a ML model that can be deployed to the telematics ECU 21 for use in inference. This allows real-time feedback to be provided to the driver of the vehicle 20. Optionally, feedback can also be provided at an end of a driving session. The latter feedback can be provided onboard the vehicle 20 or via the fleet management system 30.

The data-driven processing technique 24 can be augmented to accommodate various additional features, such as: safety-related data (e.g., collisions, collision risk, dangerous driving, etc.); sustainability (e.g., number of brakes); battery SOC for electric vehicles.

A machine-readable instruction code may be stored/distributed on a suitable medium, such as an optical storage medium or a solid-state medium supplied together with or as part of other hardware, but may also be distributed in other forms, such as via the Internet or other wired or wireless telecommunication systems. In particular, e.g., a machine-readable instruction code can be a machine-readable instruction code product stored on a computer readable medium which machine-readable instruction code product can have computer executable program code adapted to be executed to implement a specific method such as the method according to the invention. Furthermore, a machine-readable instruction code can also be a data structure product or a signal for embodying a specific method such as the method according to the invention.

The disclosure also covers all further features shown in the drawings individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the exemplary embodiments as well as subject matter comprising said features.

Furthermore, the word "comprising" does not exclude other elements or steps, and the indefinite article "a" or "an" does not exclude a plurality. A single unit or step may fulfil the functions of several features recited in the claims. The mere fact that certain measures are recited in mutually different dependent claims does not indicate that a combination of these measures cannot be used to advantage. The terms "essentially," "about," "approximately," "substantially" and the like in connection with an attribute or a value particularly also define exactly the attribute or exactly the value, respectively. The term "substantially the same" refers to a value or range that is, e.g., within 20%, within 10%, within 5%, or within 2% of the given value or range. Components described as coupled or connected may be electrically or mechanically directly coupled, or they may be indirectly coupled via one or more intermediate components. Any reference signs in the claims should not be construed as limiting the scope.

### List of reference signs (part of the description)

- 10: system
- 11: fleet
- 12: first utility vehicle
- 13: second utility vehicle
- 14: third utility vehicle
- 15: communication system
- 16: wide area network
- 17: cellular network
- 18: base stations
- 20: vehicle
- 21: telematics electronic control unit (ECU)
- 22: data interface
- 23: processing circuit(s)
- 24: data-driven processing technique
- 25: communication circuit(s)
- 26: transmission controlled area network (CAN)
- 26.1: transmission
- 26.2: gear set
- 27: tachograph
- 28: human machine interface (HMI)
- 29: data bus
- 30: fleet management system (FMS)
- 31: data communication interface
- 32: FMS processing circuit(s)
- 33: training feature generator
- 34: model parameter determination
- 35: interface controller
- 36: storage system
- 37: fleet data
- 38: model data
- 40: vehicle operation related data
- 41: model data specifying the data-driven processing technique
- 42: first telematics ECU
- 43: first transmission ECU
- 44: first tachograph
- 45: first vehicle transmission
- 52: second telematics ECU
- 53: second transmission ECU
- 54: second tachograph
- 55: second vehicle transmission
- 61: distance axis
- 62: vehicle parameter value
- 63: parameter value portion
- 64: further parameter value portion
- 65: other parameter value portion
- 66: parameter value gradient
- 67: other parameter value gradient
- 68: measurement location spacing
- 69: data discarding window
- 70: method
- 71, 72, 73: process block
- 74: measurement locations
- 75: measurement location spacing
- 76: input generator
- 77: output controller
- 81: parameter values
- 82: inputs to data-driven processing technique
- 83: output
- 84: control signal or control data
- 85: HMI portion
- 86: graphical indicator
- 87: alphanumerical indicator
- 90: boundaries
- 91: axis
- 92: further axis
- 93: other axis
- 94: gradient
- 95: further gradient
- 96: artificial intelligence (AI) model
- 97: input
- 98: output
- 99: hidden layers
- 100: method
- 101, 102: process block
- 103, 104: process block
- 105, 106: process block
- 107, 108: process block
- 111: ignition on signal or data
- 112: parameter values
- 113: driver identifier data
- 114: parameter value derivative determination
- 115: communication operation trigger
- 116: parameter value derivatives
- 117: determination of model data specifying data-driven processing technique
- 120: transmission ECU
- 121: ignition on signal or data
- 122: parameter values
- 123: driver identifier data
- 124: processing parameter values using data-driven processing technique
- 125: control action
- 126: report data
- 127: report data processing
- 131: automated manual transmission (AMT) adjustment control data
- 132: AMT adjustment
- 133: AMT operation
- 140: road network
- 141-149: road segment
- 150: method
- 151, 152: process block
- 153: process block

## Claims

1. Method of supporting vehicle operation of a vehicle (20), in particular of a utility vehicle (20), the method comprising:
obtaining, by at least one electronic control unit, ECU (21), parameter values (122) of at least one vehicle parameter;
processing, by the at least one ECU, the parameter values (122), comprising: applying a data-driven processing technique (24) to an input (82) that is generated based at least on the parameter values (122), wherein the data-driven processing technique (24) is configured to provide, as an output (83), vehicle transmission related data (83) that are indicative of a gear selection and/or of a gear shifting operation for a vehicle transmission (26.1) of the vehicle (20), the gear selection and/or the gear shifting operation being determined, using the data-driven processing technique (24), to enhance energy-efficiency of the vehicle operation; and
causing or enabling, by the at least one ECU (21), performance of at least one action based on the vehicle transmission related data (83).

2. Method of claim 1, wherein the at least one ECU comprises a telematics ECU (21), and wherein obtaining the parameter values (122) comprises communicatively interfacing, by the telematics ECU (21), with at least one controlled area network, CAN (26), to obtain one or several of the parameter values (122).

3. Method of claim 2, wherein the at least one CAN (26) comprises a vehicle transmission CAN (26).

4. Method of claim 3, wherein the vehicle transmission CAN (26) comprises an automated manual transmission, AMT, CAN (26), or a manual transmission, MT, wherein the telematics ECU (21) is configured to communicatively interface with the AMT CAN (26) or to interact with the MT to obtain at least some of the one or several of the parameter values (122).

5. Method of any one of claims 2 to 4, wherein the telematics ECU (21) is configured to obtain the one or several of the parameter values (122) in a manner that is periodic as a function of driving distance (61).

6. Method of any one of the preceding claims, further comprising:
communicatively interfacing, by the at least one ECU (21), with a tachograph (27) to obtain a driver identifier (123);
verifying, based on the driver identifier (123), that the data-driven processing technique (24) is to be applied to determine the vehicle transmission related data (83).

7. Method of any one of the preceding claims, wherein the at least one action comprises a human machine interface control action (125) to generate driver feedback (86, 87) based on the vehicle transmission related data (83) obtained using the data-driven processing technique (24).

8. Method of any one of the preceding claims, wherein the vehicle (20) comprises an automated manual transmission, AMT (26.1), and wherein the at least one action comprises an AMT adjustment action (131) to adjust AMT operation based on the vehicle transmission related data (83) obtained using the data-driven processing technique (24).

9. Method of any one of the preceding claims, further comprising receiving, by the at least one ECU (21) and from a fleet management system (30), model data (41) specifying the data-driven processing technique (24).

10. Method of claim 9, further comprising generating, by the fleet management system, the model data (41) specifying the data-driven processing technique (24) based on vehicle operation related data (40) from a fleet (11) of vehicles (12, 13, 14), wherein one or both of the following applies:
the fleet (11) of vehicles (12, 13, 14) comprises vehicles (12, 14) that do not have an automated manual transmission;
obtaining at least part of the vehicle operation related data (40) comprises applying a filter to selectively discard vehicle operation related data (40) for time windows (69) around automatic control actions.

11. Method of claim 10, wherein the fleet management system (30) is configured to determine gradients (94, 95) of at least some of the vehicle operation related data (40) to generate the model data specifying the data-driven processing technique (24).

12. Generating method of generating a data-driven processing technique (24) for supporting vehicle operation of a vehicle (20), in particular for use in the method of any one of claims 1 to 11, the generating method comprising:
obtaining, by at least one processing circuit (32) of a fleet management system (30), vehicle operation related data (40; 116) from a fleet (11) of vehicles (12, 13, 14);
generating, by the at least one processing circuit (32) of the fleet management system (30), model data (41) specifying the data-driven processing technique (24) based on the vehicle operation related data (40), wherein generating the model data (41) comprises identifying model parameter values (94, 95) and/or model hyperparameter values of the data-driven processing technique (24) that cause the data-driven processing technique (24) to provide, as an output (83), vehicle transmission related data (83) that are indicative of a gear selection and/or gear shifting operation that enhances energy-efficiency; and
providing, by the fleet management system (30), the model data (41) specifying the data-driven processing technique (24) for use in supporting the vehicle operation.

13. Generating method of any one of the preceding claims, wherein one or both of the following applies:
the fleet (11) of vehicles comprises vehicles (12, 14) that do not have an automated manual transmission;
obtaining at least part of the vehicle operation related data (40; 116) comprises applying a filter to selectively discard vehicle operation related data (40; 116) for time windows (69) around automatic control actions.

14. Generating method of claim 12 or claim 13, wherein the fleet management system (30) is configured to determine gradients (94, 95) of at least some of the vehicle operation related data (40; 116) to generate the model data (41) specifying the data-driven processing technique (24).

15. Vehicle (20), in particular utility vehicle (20), comprising:
an interface (22); and
at least one electronic control unit, ECU (21), configured to communicatively interact with the interface (22) to obtain parameter values (122) of at least one vehicle parameter;
the at least one ECU (21) being configured to apply a data-driven processing technique (24) to an input (82) that is based at least on the parameter values (122), wherein the data-driven processing technique (24) is configured to provide, as an output (83), vehicle transmission related data (83) that are indicative of a gear selection and/or of a gear shifting operation for a vehicle transmission (26.1) of the vehicle (20), the gear selection and/or the gear shifting operation being determined, using the data-driven processing technique (24), to enhance energy-efficiency of the vehicle operation; and the at least one ECU (21) being configured to cause or enable performance of at least one action based on the vehicle transmission related data (83).
